# EUROPEAN PATENT SPECIFICATION

(11) **EP 0 620 632 B1**
(45) Date of publication and mention of the grant of the patent: **24.09.1997**
(21) Application number: 94302418.2
(22) Date of filing: 06.04.1994
(51) Int. Cl.: H02K 1/17, H02K 23/04

(54) **A PMDC electric motor with a magnet spacer**
Ein Gleichstrom-Permanentmagnet Motor mit Abstandshalter zwischen den Magneten
Un moteur électrique à courant continu et à aimants permanents avec espaceur des aimants

(30) Priority: 14.04.1993 GB 9307671; 12.08.1993 GB 9316744
(43) Date of publication of application: 19.10.1994
(73) Proprietor: JOHNSON ELECTRIC S.A., CH-2300 La Chaux-de-Fonds (CH)
(72) Inventor: Lau, James Ching-Sik, 17B Kafook Court, Bedford Garden (HK)
(74) Representative: Higgins, Michael Roger

(56) References cited:
- EP-A- 0 144 004
- EP-A- 0 544 929
- WO-A-91/01588
- FR-A- 2 587 150
- GB-A- 923 477
- GB-A- 2 202 383
- US-A- 3 500 090
- PATENT ABSTRACTS OF JAPAN vol. 11, no. 314 (E-549) (2761) 13 October 1987 & JP-A-62 107 664 (NIPPON DENSO) 19 May 1987

## Description

This invention relates to permanent magnet direct current (PMDC) motors and in particular to means for locating the magnets of PMDC motors.

A conventional PMDC motor comprises a casing having a longitudinal axis which lies in a plane of symmetry; permanent magnet means which are disposed within the casing symmetrically on opposite sides of the plane of symmetry, have at least two longitudinally extending free edges, and provide a magnetic field having an axis lying in a second plane which extends perpendicular to the plane of symmetry; and spacer means of different construction on opposite sides of the second plane, for locating the permanent magnet means angularly within the casing.

As disclosed in GB 2202383A, the spacer means may comprise two wings, pressed from the side wall of the casing on one side of the second plane, but this involves an additional stamping operation in the formation of the casing. Further operations are necessary to provide means for locating the permanent magnet means longitudinally within the casing. Thus, where tabs are pressed from the side wall to provide the longitudinal locating means, at least one further stamping operation is necessary.

The purpose of this invention is to simplify the production and assembly of PMDC motors.

This is achieved by using spacer means which include a rigid insert which extends, longitudinally, between the two free edges of the magnet means and, transversely, across the plane of the symmetry of the motor.

According to the invention, there is provided a PMDC motor comprising a casing which has a longitudinal axis which lies in a plane of symmetry. Permanent magnet means are disposed within the casing symmetrically on opposite sides of the plane of symmetry, have at least two longitudinally extending free edges and provide a magnetic field having an axis lying in a second plane which extends perpendicular to the plane of symmetry. First and second spacer means having a different construction on opposite sides, respectively of the second plane, comprise a rigid insert which extends, longitudinally, between the two free edges and, transversely, across the plane of symmetry into engagement with the two free edges of the permanent magnet means to locate the permanent magnet means angularly within the casing.

The insert is of ferromagnetic material of low permeability to provide a magnetic shunt between the free edges of the permanent magnet means (or, at least, to provide a more effective magnetic shunt than is provided on the other side of the second plane). As a result, when the permanent magnet means are magnetized during the normal charging operation, following assembly of the permanent magnet means within the casing, the magnetic flux is more concentrated on the insert side of the longitudinal axis so that the second plane containing the magnetic axis is also disposed on the same side of the longitudinal axis as the insert. As a result, the rotor is magnetically biased at all times towards the insert and the resultant radial displacement of the rotor can be utilized to reduce radial vibration of the rotor and so reduce noise during operation of the motor.

In a preferred embodiment, where the casing has a closed end, the insert has two oppositely-directed lateral extensions respectively in contact with and disposed between an end face of the permanent magnet means and the closed end of the casing to locate the permanent magnet means longitudinally within the casing. This considerably simplifies positioning of the permanent magnet means within the casing and obviates the need for repeated stamping operations in the formation of the casing.

In another advantageous construction, where an end cap is provided for closing an open end of the casing, the insert is provided with first locating means adjacent the open end of the casing, and the end cap has complementary second locating means, for engagement with the first locating means to locate the end cap angularly, relative to the casing. Thus, by providing inserts with locating means in different positions, for engagement with the second locating means provided in a circular section end cap fitted to a circular section casing, it is possible to vary the angular position of the end cap relative to the casing. The brushes carried by the end cap can therefore be positioned, accurately relative to the magnets, so as to optimize commutation.

In a preferred embodiment, the casing is metallic, the insert is of conductive material, e.g. metal, and engages the casing. In this case, the locating means in the end cap may constitute a recess and the first locating means may project into this recess to provide an earth connection within the end cap. In an alternative arrangement, the second locating means may comprise a projection and the first locating means may comprise a recessed formed in the insert for receiving the projection. To provide an earth connection within the end cap, it is necessary to utilize locating means of conductive material or to provide an additional conductive element for this purpose.

Where the casing is metallic and the insert is of conductive material such as metal, the insert may be formed with a flat, longitudinally extending, central portion with two oppositely inclined side portions diverging from the central portion. The side portions may have parallel edges for engagement with the longitudinally extending free edges of the magnets, and the lateral extensions may comprise parts of the side portions which extend beyond the parallel edges.

In a motor incorporating such an insert, at least one aperture may be formed in the closed end of the casing and have an inwardly directed rim, and a locating portion extending from one end of the central portion may have a recess of complementary shape to the rim and may engage the rim to position the insert within the casing.

In one form of construction, the permanent magnet means comprise two separate arcuate magnets and have two further longitudinally extending free edges. In this case, the spacer means comprise an additional spacer which engages and locates the two further longitudinally extending free edges and, where the magnets are of rigid material, such as sintered particulate material, the additional spacer is preferably resiliently deformable, to accommodate variations in spacing arising from slight irregularities in the size, shape and position of the magnets. Alternatively, where the magnets are of resiliently deformable material, such as magnetic rubber (i.e. rubber impregnated with particulate permanent magnet material), the additional spacer may comprise a rigid member which may have a shape similar to the shape of the rigid insert.

It is also possible to dispense with the additional spacer where the permanent magnet means comprise two separate magnets which are independently fastened to the inside of the casing, e.g. by gluing. In this case, the rigid insert constituting the spacer means serves to locate the permanent magnets prior to their attachment to the casing and may also function in an auxiliary manner to provide angular location of the end cap, an earth connection within the end cap, and a magnetic shunt for the purpose of offsetting the magnetic axis.

In an alternative form of construction, where the permanent magnet means are of resiliently deformable material, they may comprise integral portions of a single, part-annular section magnet of more than 180° angular extent. In this case, the rigid insert serves to hold the magnet in place so that the magnet need not be independently attached to the casing, as by gluing.

Preferred embodiments of the invention will now be described, by way of example only, with reference to the accompanying drawings.
Figure 1 is a sectional side elevation of a PMDC motor embodying the invention;
Figure 2 is a plan view of a rigid insert forming part of the motor shown in Figure 1;
Figure 3 is an internal end view of an end cap forming part of the motor shown in Figure 1;
Figure 4 is an internal end view of part of the motor shown in Figure 1;
Figures 5 and 6 are internal end views, similar to Figure 4, showing parts of two further motors embodying the invention;
Figures 7 and 8 are a partial sectional side elevation corresponding to Figure 1 and an internal end view of the end cap corresponding to Figure 3 showing a motor with a modified rigid insert;
Figures 9, 10 and 11 are a plan view, a sectional side elevation and an end elevation of a further preferred form of rigid insert; and
Figures 12 is an internal view, similar to Figure 4, showing parts of a PMDC motor fitted with the rigid insert of Figures 9 to 11.

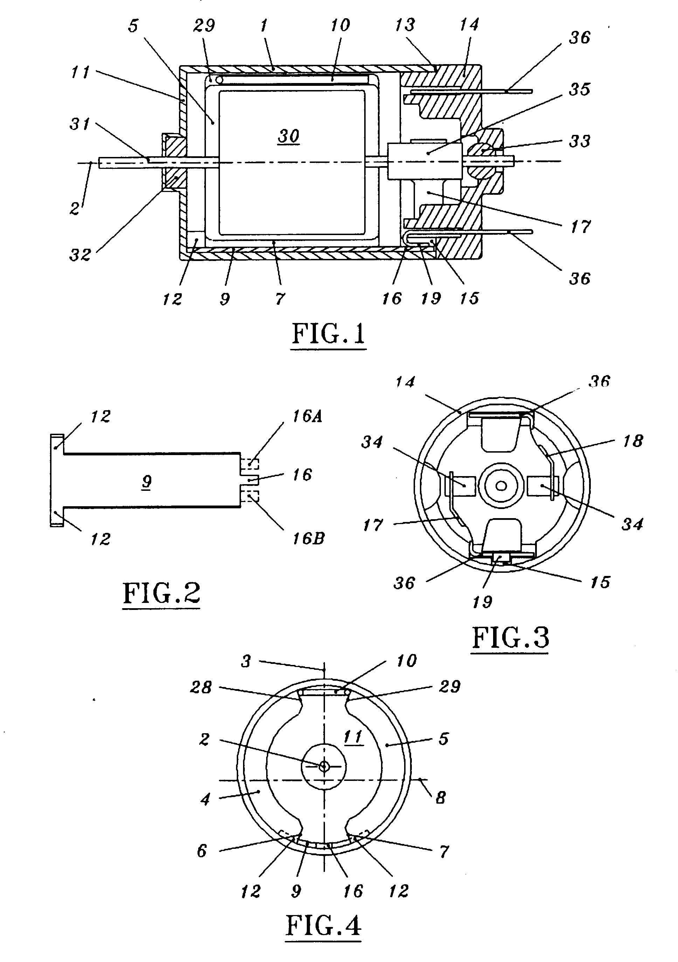

The casing 1 of the PMDC motor shown in Figure 1 has a closed end 11 and an open end 13 which is closed by an insulating end cap 14 of moulded plastics material. The rotor 30 has a shaft 31 which is journalled in bearings 32 and 33 mounted, respectively, in the closed end 11 of the casing and in the end cap 14.

Two sintered arcuate magnets 4 and 5 are symmetrically disposed within the casing 1 on opposite sides of a plane of symmetry 3 containing the longitudinal axis 2 of the casing 1, as shown in Figure 4. A mild steel insert 9 extending transversely across the plane of symmetry 3 engages longitudinally extending free edges 6 and 7 of the magnets 4 and 5 so as to locate the magnets 4 and 5 angularly within the casing 1. A resiliently deformable "U"-shaped spacer 10 which, together with the insert 9, forms spacer means, engages two further longitudinally extending free edges 28 and 29 of the magnets 4 and 5, to hold the magnets 4 and 5 securely in position.

As shown in Figure 2, the insert 9 has two oppositely directed lateral extensions 12 which are each disposed between and in contact with one of the magnets 4 and 5 and the closed end 11 of the casing 1 to thereby locate the magnets 4 and 5 longitudinally within the casing 1.

As shown in Figures 1 and 3, brushes 34 are carried by brush assemblies 17 and 18 for engaging a commutator 35 mounted on the shaft 31. Each brush assembly 17 and 18 has a terminal extension 36 which projects through a slot in the end cap 14. As shown in Figure 2, the rigid insert 9 is formed with first locating means in the form of a longitudinal extension 16. This extension engages with complementary second locating means formed in the moulded plastic end cap 14 to angularly align the end cap with respect to the casing, which in turn ensures the desired alignment of the brushes with the magnets. The second locating means comprises a recess 15 which accommodates a resilient tab 19 formed on the brush assembly 17 for contacting the extension 16.

As shown in Figure 1, the extension 16 of the first locating means is disposed adjacent the open end 13 of the casing 1 and prevents insertion of the end cap 14 into the casing 1 except at the angular orientation in which the recess 15 receives the extension 16.

As shown in Figure 2, the extension 16 lies on the centre line of the insert 9. This is for motors which can be driven in both directions. However, where the motor is required to run in only one direction, the extension 16 is disposed in one of the positions 16A and 16B, shown in broken outline, to vary the angular disposition of the end cap 14 and the brushes 34 relative to the magnets 4 and 5 to optimize commutation.

During production of the motor, after the magnets 4 and 5 have been positioned within the casing 1 by means of the insert 9 and an additional spacer in the form of a resilient "U"-shaped spring 10, the magnets 4 and 5 are magnetized in a charging operation in which the magnets are subjected to an intense magnetic field directed perpendicular to the plane of symmetry 3 along an axis passing through the longitudinal axis 2 of the motor. However, the mild steel insert 9 acts as a magnetic shunt which concentrates the magnetic field on the same side of the casing 1 as the insert 9, thus displacing the axis of the magnetic field away from the longitudinal axis 2 towards the insert 9 so as to lie in a second plane 8 perpendicular to the plane 3, as shown in Figure 4. As a result, when an armature 30 is mounted within the casing 1, it is magnetically urged towards the insert 9. It can be arranged that this magnetic bias is sufficient to ensure that the shaft 31 always rotates in contact with the surfaces of the bearings 32 and 33 at a constant angular location. This reduces vibration of the shaft 31 within the bearings 32 and 33, known as bearing rattle, thus minimising wear and noise. Further advantage may be gained if the motor is mounted with the magnetic biasing aligned with gravity to urge the shaft 31 into contact with the lowermost parts of the bearing surfaces.

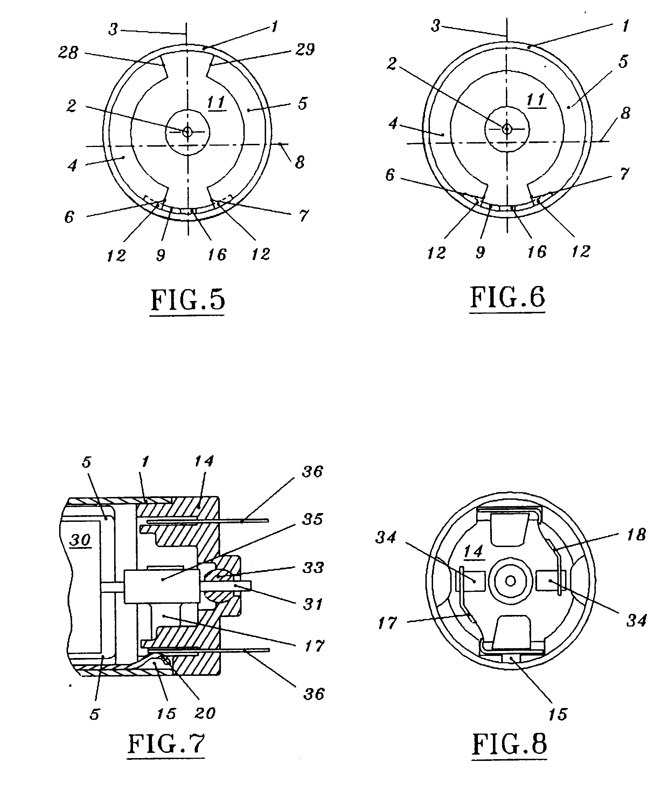

In a further embodiment, shown in Figure 5, the magnets 4 and 5 comprise strips of magnetic rubber which are adhesively fastened to the inside surface of the casing 1. As shown, a rigid insert 9 constituting the spacer means is disposed between longitudinally extending free edges 6 and 7 of the magnets 4 and 5 to locate the magnets 4 and 5 while they are adhesively fastened to the casing 1. Although not shown, an additional spacer may be disposed between two further longitudinally extending free edges 28 and 29 of the magnets 4 and 5. In this case, the additional spacer may be a rigid spacer which engages the magnets 4 and 5 with an interference fit because interference can be easily accommodated by minor local deformation of the rubber magnets 4 and 5.

In the embodiment shown in Figure 6, a single strip of magnetic rubber is mounted within the casing 1 to form a single magnet of part-annular cross-section of more than 180° angular extent. A mild steel insert 9, identical with that shown in Figure 4, is mounted between longitudinally extending free edges 6 and 7 of the magnet. The magnet comprises two integral portions forming symmetrically disposed magnet means 4 and 5 which function in practically the same manner as the two magnets 4 and 5 of the embodiment shown in Figure 5. However, in the latter case, installation of the magnet means is simplified in that they are portions of a single piece of magnetic rubber which are integral with an intermediate portion which serves as an additional spacer. It is therefore possible to hold this piece of rubber in place by means of the insert 9, without having to glue or otherwise attach the piece of rubber to the casing 1.

In the embodiments illustrated in Figures 1 to 6, the rigid insert 9 is of arcuate cross-section which conforms to the internal surface of the casing 1. However, flat or planar inserts may be used instead, particularly where the insert is not required to provide an electrical connection between the casing 1 and the end cap.

A modified insert 9 is utilized in the embodiment illustrated in Figures 7 and 8. Here, the extension 16 on the insert 9 is provided with a resilient tab 20 in the form of an upwardly offset convexity which engages the brush assembly 17 within the recess 15 of the second locating means provided on the end cap 14. In this case, the brush assembly 17 is identical with the brush assembly 18. The insert 9 can therefore be provided in an electric motor with conventional brush assemblies.

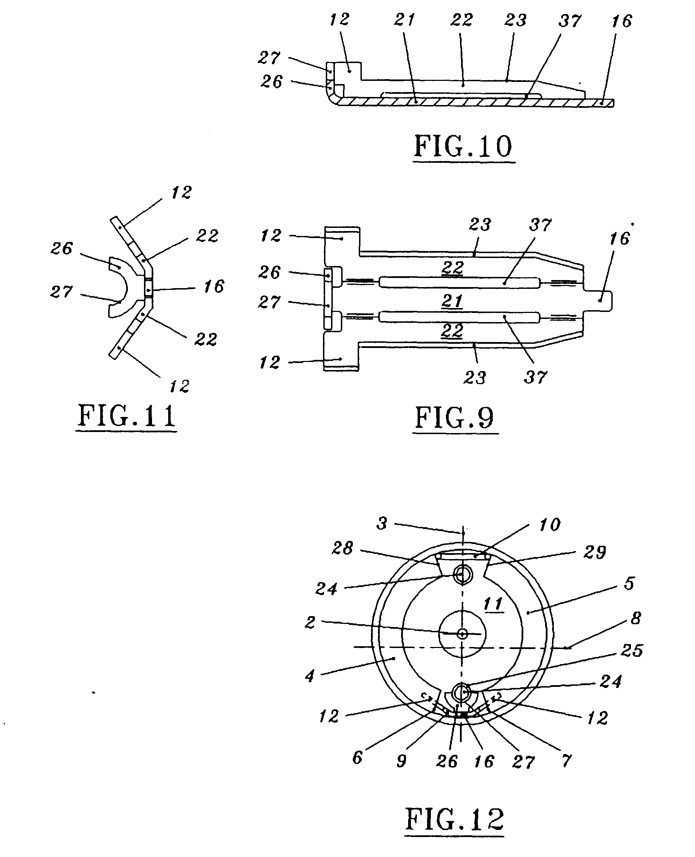

The insert 9 shown in Figures 9 to 11 is similar to the insert 9 shown in Figure 2, but is formed in a two-stage stamping operation so as to be provided with a flat central portion 21, two oppositely inclined side portions 22 diverging from the central portion 21, a locating portion 26 extending perpendicularly from one end of the central portion 21, and a longitudinal extension 16 projecting from the other end of the central portion 21. To facilitate bending of the insert 9, to form the divergent side portions 22, slots 37 are formed in the body of the insert during the first stage of the stamping operation.

As shown in Figure 9, the side portions 22 have parallel edges 23, extending throughout most of their length, for engagement with the longitudinally extending free edges 6 and 7 of the magnets 4 and 5, as shown in Figure 12. However, at one end of the insert 9, the side portions 22 extend beyond the edges 23 to provide the lateral extensions 12 for separating the ends of the magnets 4 and 5 from the closed end 11 of the casing 1. Thus, by providing the lateral extensions 12 and the edges 23 on divergent side portions 22, the lateral extensions 12 and the edges 23 are spaced radially inwards of the casing 1 and engage the magnets 4 and 5 more securely, away from the corners of the magnets 4 and 5. As shown in Figures 9 and 10, the other end of the insert 9 is tapered to facilitate insertion of the magnets 4 and 5 into the casing 1.

In the embodiment shown in Figure 12, ventilation or mounting apertures 24 are stamped in the closed end 11 of the casing 1 and have inwardly directed rims 25. The rim 25 of one of these apertures 24 is engaged by a recess 27, of complementary shape to the rim 25, in the locating portion 26 of the insert 9, to position the insert 9 within the casing 1. As shown, the apertures 24 and rims 25 are both circular and the recess 27 is part-circular. However, non-circular shapes may be used.

## Claims

1. A PMDC motor comprising:
a casing (1) having a longitudinal axis (2) which lies in a plane of symmetry (3);
permanent magnet means (4 and 5) disposed within the casing (1) symmetrically on opposite sides of the plane of symmetry (3), have at least two longitudinally extending free edges (6 and 7), and provide a magnetic field having an axis lying in a second plane (8) which extends perpendicular to the plane of symmetry (3); and
first and second spacer means (9 and 10) on opposite sides, respectively, of the second plane (8) for locating the permanent magnet means (4 and 5) angularly within the casing (1), the first spacer means being different from the second spacer means:
characterised in that:
the first spacer means (9) is a rigid insert (9) which extends, longitudinally, between and in engagement with the two free edges (6 and 7) and, transversely, across the plane of symmetry (3),
the insert (9) is of ferromagnetic material and provides a magnetic shunt between the free edges (6 and 7) of the permanent magnet means (4 and 5); and,
the second plane (8), containing the axis of the magnetic field, is disposed on the same side of the longitudinal axis (2) as the insert (9).

2. A PMDC motor, according to Claim 1, in which:
the casing (1) has a closed end (11);
the insert (9) has tow oppositely-directed lateral extensions (12) respectively in contact with and disposed between an end face of the permanent magnet means (4 and 5) and the closed end (11) of the casing to locate the permanent magnet means (4 and 5) longitudinally within the casing (1).

3. A PMDC motor, according to Claim 1 or Claim 2, in which:
the casing (1) has an open end (13);
an end cap (14) is provided for closing the open end (13) of the casing (1); and
the insert (9) has first locating means (16), adjacent the open end (13) of the casing (1), for engagement with the complementary second locating means (15) provided on the end cap (14) to locate the end cap (14) angularly, relative to the casing (1).

4. A PMDC motor, according to Claim 3, in which:
the casing (1) is metallic;
the insert (9) is of conductive material and engages the metallic casing (1);
the second locating means (15) comprise a recess in the end cap (14); and the first locating means (16) project into the recess and provide an earth connection within the end cap (14).

5. A PMDC motor, according to Claim 4, in which:
two brush assemblies (17 and 18) are mounted in the end cap (14); and
one of the brush assemblies (17) is provided with a resilient tab (19) for engagement with the first locating means (16) provided on the insert (9).

6. A PMDC motor, according to Claim 4, in which:
two brush assemblies (17 and 18) are mounted in the end cap (14); and
the first locating means (16) is provided with a resilient tab (20) for engagement with one of the brush assemblies (17).

7. A PMDC motor, according to any one of Claims 4 to 6, in which:
the insert (9) has a flat, longitudinally extending, central portion (21);
two oppositely inclined side portions (22) diverging from the central portion (21),
the side portions (22) having parallel edges (23) for engagement with the longitudinally extending free edges (6 and 7) of the magnets (4 and 5); and
two lateral extensions (12) respectively comprising parts of the side portions (22) which extend beyond the parallel edges (23).

8. A PMDC motor, according to Claim 7, in which:
at least one aperture (24) is formed in the closed end (11) of the casing (1) and has an inwardly directed rim (25); and
a locating portion (26) extending perpendicularly from one end of the central portion (21) of the insert (9) has a recess (27) of complementary shape to the rim (25) and engages the rim (25) to position the insert (9) within the casing (1).

9. A PMDC motor, according to any one of Claims 1 to 8, in which:
the permanent magnet means (4 and 5) comprise two separate arcuate magnets and have two further longitudinally extending free edges (28 and 29); and
the second spacer means (10) which is non-rigid and resiliently engages the two further longitudinally extending free edges (27 and 29).

10. A PMDC motor, according to any one of Claims 1 to 8, in which the permanent magnet means (4 and 5) are of resiliently deformable material and comprise integral portions of a single, part-annular section magnet of more than 180° angular extent.

## Patentansprüche

1. Dauermagnetgleichstrommotor, der aufweist:
ein Gehäuse (1) mit einer Längsachse (2), die in einer Symmetrieebene (3) liegt;
Dauermagnete (4 und 5) die innerhalb des Gehäuses (1) symmetrisch auf den gegenüberliegenden Seiten der Symmetrieebene (3) angeordnet sind, und die mindestens zwei sich in Längsrichtung erstreckende freie Ränder (6 und 7) aufweisen und ein Magnetfeld liefern, das eine Achse aufweist, die in einer zweiten Ebene (8) liegt, die sich senkrecht zur Symmetrieebene (3) erstreckt; und
erste und zweite Abstandshalter (9 und 10) auf den entsprechenden gegenüberliegenden Seiten der zweiten Ebene (8) für das Anordnen der Dauermagneten (4 und 5) winkelig innerhalb des Gehäuses (1), wobei der erste Abstandshalter vom zweiten Abstandshalter verschieden ist;
dadurch gekennzeichnet, daß:
der erste Abstandshalter (9) ein starrer Einsatz (9) ist, der sich in der Längsrichtung zwischen den zwei freien Rändern (6 und 7) und in Eingriff mit diesen und quer über die Symmetrieebene (3) hinweg erstreckt;
der Einsatz (9) aus ferromagnetischem Material besteht und einen magnetischen Nebenschluß zwischen den freien Rändern (6 und 7) der Dauermagneten (4 und 5) bewirkt; und
die zweite Ebene (8), die die Achse des Magnetfeldes enthält, auf der gleichen Seite der Längsachse (2) angeordnet ist wie der Einsatz (9).

2. Dauermagnetgleichstrommotor nach Anspruch 1, bei dem:
das Gehäuse (1) ein geschlossenes Ende (11) aufweist;
der Einsatz (9) zwei entgegengesetzt gerichtete seitliche Verlängerungen (12) aufweist, die entsprechend damit in Kontakt und zwischen einer Stirnfläche der Dauermagneten (4 und 5) und dem geschlossenen Ende (11) des Gehäuses angeordnet sind, um die Dauermagneten (4 und 5) in der Längsrichtung innerhalb des Gehäuses (1) anzuordnen.

3. Dauermagnetgleichstrommotor nach Anspruch 1 oder Anspruch 2, bei dem:
das Gehäuse (1) ein offenes Ende (13) aufweist;
ein Abschlußdeckel (14) für das Schließen des offenen Endes (13) des Gehäuses (1) vorhanden ist; und
der Einsatz (9) eine erste Lokalisierungseinrichtung (16) angrenzend an das offene Ende (13) des Gehäuses (1) für einen Eingriff mit der komplementären zweiten Lokalisierungseinrichtung (15) aufweist, die am Abschlußdeckel (14) vorhanden ist, um den Abschlußdeckel (14) winkelig relativ zum Gehäuse (1) anzuordnen.

4. Dauermagnetgleichstrommotor nach Anspruch 3, bei dem:
das Gehäuse (1) metallisch ist;
der Einsatz (9) aus einem leitfähigen Material besteht und mit dem metallischen Gehäuse (1) in Eingriff kommt;
die zweite Lokalisierungseinrichtung (15) eine Aussparung im Abschlußdeckel (14) aufweist; und
die erste Lokalisierungseinrichtung (16) in die Aussparung hineinragt und eine Erdverbindung innerhalb des Abschlußdeckels (14) bewirkt.

5. Dauermagnetgleichstrommotor nach Anspruch 4, bei dem:
zwei Bürstenbaugruppen (17 und 18) im Abschlußdeckel (14) montiert sind; und
eine der Bürstenbaugruppen (17) mit einer elastischen Nase (19) für einen Eingriff mit der am Einsatz (9) vorhandenen ersten Lokalisierungseinrichtung (16) versehen ist.

6. Dauermagnetgleichstrommotor nach Anspruch 4, bei dem:
zwei Bürstenbaugruppen (17 und 18) im Abschlußdeckel (14) montiert sind; und
die erste Lokalisierungseinrichtung (16) mit einer elastischen Nase (20) für einen Eingriff mit einer der Bürstenbaugruppen (17) versehen ist.

7. Dauermagnetgleichstrommotor nach einem der Ansprüche 4 bis 6, bei dem:
der Einsatz (9) einen flachen, sich in Längsrichtung erstreckenden mittigen Abschnitt (21) aufweist;
zwei entgegengesetzt geneigte Seitenabschnitte (22) vom mittigen Abschnitt (21) diveriergen;
die Seitenabschnitte (22) parallele Ränder (23) für einen Eingriff mit den sich in Längsrichtung erstreckenden freien Rändern (6 und 7) der Magneten (4 und 5) aufweisen; und
zwei seitliche Verlängerungen (12) entsprechend Teile der Seitenabschnitte (22) aufweisen, die sich über die parallelen Ränder (23) hinaus erstrecken.

8. Dauermagnetgleichstrommotor nach Anspruch 7, bei dem:
mindestens eine Öffnung (24) im geschlossenen Ende (11) des Gehäuses (1) gebildet wird und einen nach innen gerichteten Rand (25) aufweist; und
ein Lokalisierungsabschnitt (26), der sich senkrecht von einem Ende des mittigen Abschnittes (21) des Einsatzes (9) aus erstreckt, eine Aussparung (27) aufweist, die eine zum Rand (25) komplementäre Form aufweist und mit dem Rand (25) in Eingriff kommt, um den Einsatz (9) innerhalb des Gehäuses (1) anzuordnen.

9. Dauermagnetgleichstrommotor nach einem der Ansprüche 1 bis 8, bei dem:
die Dauermagneten (4 und 5) zwei separate bogenförmige Magneten aufweisen und zwei weitere sich in Längsrichtung erstreckende freie Ränder (28 und 29) besitzen; und
der zweite Abstandshalter (10) nicht starr ist und elastisch mit den zwei weiteren sich in Längsrichtung erstreckenden freien Rändern (27 und 29) in Eingriff kommt.

10. Dauermagnetgleichstrommotor nach einem der Ansprüche 1 bis 8, bei dem die Dauermagneten (4 und 5) aus einem elastisch verformbaren Material bestehen und eingebaute Abschnitte eines einzelnen Magneten mit teilweise ringförmigem Querschnitt mit einem Winkelgrad von mehr als 180° aufweisen.

## Revendications

1. Moteur PMDC (moteur électrique à courant continu) comprenant:
un boîtier (1) ayant un axe longitudinal (2) qui se trouve dans un plan de symétrie (3);
des aimants permanents (4 et 5) disposés dans le boîtier (1) symétriquement sur les côtés opposés du plan de symétrie (3), ayant au moins deux bords libres s'étendant longitudinalement (6 et 7) et créant un champ magnétique ayant un axe situé dans un deuxième plan (8) qui s'étend perpendiculairement au plan de symétrie (3); et
des premier et deuxième moyens écarteurs (9 et 10) sur les côtés opposés respectivement du deuxième plan (8) pour fixer les aimants permanents (4 et 5) angulairement dans le boîtier (1), le premier moyen écarteur étant différent du deuxième moyen écarteur;
caractérisé en ce que:
le premier moyen écarteur (9) est un insert rigide (9) qui est disposé longitudinalement entre les deux bords libres (6 et 7) en étant en contact avec eux et est disposé transversalement par rapport au plan de symétrie (3);
l'insert (9) est un matériau ferromagnétique et constitue un shunt magnétique entre les bords libres (6 et 7) des aimants permanents (4 et 5); et
le deuxième plan (8) contenant l'axe du champ magnétique est disposé sur le même côté de l'axe longitudinal (2) que l'insert (9).

2. Moteur PMDC selon la revendication 1, dans lequel:
le boîtier (1) a une extrémité fermée (11);
l'insert (9) a deux prolongements latéraux (12) opposés l'un à l'autre respectivement en contact avec et disposés entre une face terminale de l'aimant permanent (4 et 5) et l'extrémité fermée (11) du boîtier pour fixer les aimants permanents (4 et 5) longitudinalement dans le boîtier (1).

3. Moteur PMDC selon la revendication 1 ou 2, dans lequel:
le boîtier (1) a une extrémité ouverte (13);
un capuchon d'extrémité (14) est disposé pour fermer l'extrémité ouverte (13) du boîtier (1); et
l'insert (9) a des premiers moyens de positionnement (16) proches de l'extrémité ouverte (13) du boîtier (1) pour venir en contact avec les deuxièmes moyens de positionnement complémentaires (15) disposés sur le capuchon d'extrémité (14) pour fixer le capuchon d'extrémité (14) angulairement par rapport au boîtier (1).

4. Moteur PMDC selon la revendication 3, dans lequel:
le boîtier (1) est métallique;
l'insert (9) est en matériau conducteur et est en contact avec le boîtier métallique (1);
le deuxième moyen de positionnement (15) comprend un évidement dans le capuchon d'extrémité (14); et
le premier moyen de positionnement (16) fait saillie dans l'évidement et réalise une connexion à la terre dans le capuchon d'extrémité (14).

5. Moteur PMDC selon la revendication 4, dans lequel:
deux assemblages à balais (17 et 18) sont montés dans le capuchon d'extrémité (14); et
l'un des assemblages à balais (17) est pourvu d'une patte élastique (19) pour venir en contact avec le premier moyen de positionnement (16) disposé sur l'insert (9).

6. Moteur PMDC selon la revendication 4, dans lequel:
deux assemblages à balais (17 et 18) sont montés dans le capuchon d'extrémité (14); et
le premier moyen de positionnement (16) est pourvu d'une patte élastique (20) pour venir en contact avec l'un des assemblages à balais (17).

7. Moteur PMDC selon l'une quelconque des revendications 4 à 6, dans lequel:
l'insert (9) a une partie centrale plane s'étendant longitudinalement (21);
deux parties latérales inclinées de manière opposée (22) et divergeant de la partie centrale (21);
les parties latérales (22) ayant des bords parallèles (23) pour venir en contact avec les bords libres disposés longitudinalement (6 et 7) des aimants (4 et 5); et
deux prolongements latéraux (12) comprenant respectivement des parties des parties latérales (22) qui s'étendent au-delà des bords parallèles (23).

8. Moteur PMDC selon la revendication 7, dans lequel:
au moins une ouverture (24) est formée dans l'extrémité fermée (11) du boîtier (1) et a un rebord tourné vers l'intérieur (25); et
une partie de positionnement (26), s'étendant perpendiculairement d'une extrémité de la partie centrale (21) de l'insert (9), a un évidement (27) de forme complémentaire par rapport au rebord (25) et est en contact avec le rebord (25) pour positionner l'insert (9) dans le boîtier (1).

9. Moteur PMDC selon l'une quelconque des revendications 1 à 8, dans lequel:
les aimants permanents (4 et 5) comprennent deux aimants incurvés séparés et ont deux autres bords libres disposés longitudinalement (28 et 29); et
le deuxième moyen écarteur (10) est non rigide et est en contact élastique avec les deux autres bords libres disposés longitudinalement (27 et 29).

10. Moteur PMDC selon l'une quelconque des revendications 1 à 8 dans lequel les aimants permanents (4 et 5) sont formés d'un matériau élastiquement déformable et comprennent des parties en une pièce d'un seul aimant à section en partie d'anneau s'étendant angulairement sur plus de 180°.
